# EUROPEAN PATENT APPLICATION

(11) **EP 2 255 900 A1**
(43) Date of publication of application: **01.12.2010**
(21) Application number: 10007726.2
(22) Date of filing: 19.09.2006
(51) Int. Cl.: B21D 11/08, B21D 11/20

(54) **Sheet of material with joint**

(30) Priority: 23.09.2005 US 720417 P
(62) Divisional of application: 06825043.0
(71) Applicant: Industrial Origami, Inc., Middleburg Heights, Ohio 44130 (US)
(72) Inventor: Durney, Max W., Middleburg Heights, Ohio 44130 (US)
(74) Representative: Bucks, Teresa Anne

(57) **Abstract**

A sheet of material, suitable for bending along a bend line to a predetermined angle, includes one planar segment on one side of the bend line, another planar segment on another side of the bend line, one displacement extending in the thickness direction of the sheet of material from the one planar segment, and another displacement extending in the thickness direction of the sheet of material from the another planar segment. The displacements are dimensioned and configured such that they engage one another during bending and limit the angular displacement of the one side relative to the another side. As such, the displacements self-key the resulting corner at the predetermined angle and provide structural integrity to the corner.; The sheet of material, having a plane-to-plane joint, includes a tongue formed in one planar segment, a receiver formed in another planar segment for longitudinally receiving the tongue, a latch protrusion formed in the one planar segment, and a latch recess formed in the another planar segment. The receiver holds a lower surface of the one planar segment in close proximity with an upper surface of the another planar segment and transversely limits the planar segments. The latch protrusion and latch recess are self-latching upon insertion of the tongue into the receiver. Methods of preparing and bending such sheet materials are also disclosed.

## Description

The present disclosure relates, in general, to the precision folding and joining of sheet material. In particular, the present disclosure relates to preparing the sheet material for bending to a predetermined angle then bending or folding the sheet into a three-dimensional structure incorporating the predetermined angle. The present disclosure also relates to preparing the sheet material for plane-to-plane engagement of planar segments of the sheet material once it has been bent or folded into the three-dimensional structure.

The following related patents set forth in considerable detail apparatus and methods for bending or folding sheet material to form three-dimensional structures: US 7350390, US 7152450, US 7452449, US 6877349, and US 6481259. Flat sheets are provided with a plurality of folding structures which will produce folding of the sheets along fold lines that can very precisely be controlled. The folding structures are typically slits, grooves or displacements that are positioned on alternating sides of a desired fold line so as to define spaced-apart bending or folding straps that precisely control folding of the sheet Most preferably,the folding structures also produce edge-to-face engagement of the sheet material on opposite sides of the folding structures to further enhance folding precision and structural strength.

The folded sheets of the related applications often have been used to provide three-dimensional structures including, but not limited to, electronic component chassis for computers, audio receivers, televisions, DVD players, motor vehicles, autos, construction, aerospace, appliances, industrial, packaging and other non-electronics-related goods. The folded shems generally have free or adjacent planar segments that are folded into abutting or overlapping relation and then affixed and/or joined together to stabilize the resulting structure against unfolding and to otherwise promote rigidity. The previous techniques for affixing and/or joining the planar segments of the folded sheets together have varied considerably, depending upon the application.

In many instances, adjoining planar segments on either side of a bend line have been three-dimensionally fixed utilizing a third, intersecting planar segment or other intersecting structure to limit the degrees of freedom and otherwise promote rigidity between the adjoining planar segments. In both cases, the third planar segment or other structure is affixed to the adjoining planar segments using standard fasteners such as screws, rivets, other mechanical fasteners, and/or welding, brazing or adhesives. In other instances where planar segments overlap with one another, the overlapping planar segments have been joined together using standard fasteners such as screws, rivets, other mechanical fasteners, and/or welding, brazing or adhesives.

What is sought is an apparatus and method to employ the ability to precisely fold sheet material in a manner that will eliminate the need for intersecting planar segments or other intersecting structure to limit the degrees of freedom between adjoining planar segments. What is also sought after is an apparatus and method to employ the ability to precisely fold sheet material in a manner which will allow fastener-free, high strength, low cost joinder of planar segments of the sheet material.

In summary, one aspect of the present disclosure is directed to a method of preparing a sheet of material for bending along a bend line to a predetermined angle, the method comprising the steps of: providing at least one keying element in the sheet of material along one side of the bend line; and providing at least one another keying element in the sheet of material along another side of the bend line, the at least one keying element and the at least one another keying element being located in cooperative relationship to engage one another upon bending the sheet of material to limit the angular displacement of the one side of the material relative to the another side of the material.

The method may further include, prior to the providing steps, providing at least one bend-controlling structure in the sheet of material along the bend line. The at least one and at least one another keying elements may be immediately proximate the at least one bend-controlling structure on opposing sides of the bend line.

Another aspect of the present disclosure is directed to a method of preparing a sheet of material for bending along a bend line to a predetermined angle, the method comprising the steps of: forming one displacement in the thickness direction of the sheet of material on one side of the bend line; and forming another displacement in the thickness direction of the sheet of material on another side of the bend line, the another displacement complementary in shape to the one displacement; and wherein the one and another displacements may be dimensioned and configured such that the one and another displacements engage one another during bending and limit the angular displacement of the one side relative to the another side.

The forming one and another displacement steps may be accomplished by providing a plurality of cooperating sets of one and another displacements spaced along the bend line. The method may further include, prior to the forming steps, providing an aperture through the sheet of material along the bend line. The one and another displacements may be immediately proximate the aperture on opposing sides of the bend line. The aperture may extend entirely through the sheet of material. The forming and providing steps may be accomplished simultaneously. The providing step may be accomplished using one of a stamping process, a punching process, a roll forming process, and an embossing process. The forming steps may be accomplished using one of a stamping process, a punching process, a roll forming process, and an embossing process. The forming steps may be accomplished simultaneously.

The forming one displacement step may be accomplished by forming one free edge, and the forming another displacement step may be accomplished by forming another free edge. The one and another free edges may be dimensioned and configured to abut against one another at the predetermined angle. The forming one displacement step may also be accomplished by forming the one free edge with a radius RI, and the forming another displacement step may be accomplished by forming the another free edge with a radius R2. Radius RI may be substantially equal to R2. At least one of the forming one and another displacement steps may be accomplished forming a semi-cylindrical displacement. The semi-cylindrical displacement may extend obliquely from the sheet of material. Alternatively, the semi-cylindrical displacement extends substantially parallel to a planar surface of the sheet of material. At least one of the forming one and another displacement steps may be accomplished by forming a semi-spherical displacement. Alternatively, the forming one and another displacement steps may be accomplished forming a semi-spherical displacements. Further still, the forming one and another displacement steps may be accomplished by forming a plurality of sets of semi-spherical displacements.

The forming one and another displacement steps may be further accomplished by forming the one displacement with an outer surface and the another displacement with an inner surface. The outer and inner surfaces may be dimensioned and configured to provide frictional engagement therebetween to limit the angular displacement of the one side relative to the another side. Alternatively, the forming one displacement step may be further accomplished by forming the one displacement with a radially-extending protrusion, and the forming another displacement step may be further accomplished by forming the another displacement with a radially-extending recess. The protrusion and the recess may be dimensioned and configured to engage one another to limit the angular displacement of the one side relative to the another side.

The forming another displacement step may be further accomplished by forming a plurality of circumferentially-spaced, radially-extending recesses. The protrusion and recesses may be dimensioned and configured to engage one another to adjustably limit the angular displacement of the one side relative to the another side.

The method may further include bending the sheet of material along the bend line. The bending step may be accomplished manually.

Yet another aspect of the present disclosure is directed to a sheet of material suitable for bending along a bend line to a predetermined angle, the sheet including one planar segment on one side of the bend line, another planar segment on another side of the bend line, one displacement extending in the thickness direction of the sheet of material from the one planar segment, and another displacement extending in the thickness direction of the sheet of material from the another planar segment The one and another displacements may be dimensioned and configured such that the one and another displacements engage one another during bending and limit the angular displacement of the one side relative to the another side.

The sheet of material may further include an aperture extending through the sheet material along the bend line. The one and another displacements may be immediately proximate the aperture on opposing sides of the bend line. The sheet of material may further include a plurality of sets of one and another displacements spaced along the bend line. The one displacement may include one free edge, and the another displacement may include another free edge. The one and another free edges may be dimensioned and configured to abut against one another at the predetermined angle upon bending of the sheet of material. The one free edge may have a radius R1, and the another free edge may have a radius R2. Radius R1 may be substantially equal to R2. The one displacement and the another displacement may be substantially symmetric. At least one of the displacements may be semi-cylindrical. The semi-cylindrical displacement may extend obliquely from the sheet of material. The semi-cylindrical displacement may extend substantially parallel to a planar surface of the sheet of material. At least one of the displacements may be semi-spherical.

The one displacement may have an outer surface and the another displacement may have an inner surface, wherein the outer surface of the one displacement and the inner surface of the another displacement may be dimensioned and configured to provide frictional engagement therebetween to limit the angular displacement of the one side relative to the another side. Again, the displacements may be semi-spherical. The one displacement may include a radially-extending protrusion, and the another displacement may include a radially-extending recess. The protrusion and the recess may be dimensioned and configured to engage one another to limit the angular displacement of the one side relative to the another side. The another displacement may include a plurality of circumferentially-spaced, radiauy-extending recesses. The protrusion and recesses may be dimensioned and configured to engage one another to adjustably limit the angular displacement of the one side relative to the another side.

Still another aspect of the present disclosure is directed to a sheet of material having a plane-to-plane joint, the sheet of material including one planar segment, another planar segment, an tongue formed in the one planar segment, a receiver formed in the another planar segment for longitudinally receiving the tongue, the receiver dimensioned and configured to hold a lower surface of the one planar segment in close proximity with an upper surface of the another planar segment and transversely limit the one and another planar segments, a latch protrusion formed in the one planar segment, and a latch recess formed in the another planar segment. The latch protrusion and latch recess may be dimensioned and configured for self-latching upon insertion of the tongue into the receiver.

The receiver may include longitudinally-extending channels stamped in opposing sides of the another planar segment. The tongue may include a channel engaging shoulder dimensioned and configured to engage with and abut against at least one of the longitudinally-extending channels to limit longitudinal insertion of the tongue into the receiver. At least one of the tongue and the receiver may include a biasing bulge for biasing the one planar segment away from the other planar segment such that opposing sides of the one planar segment abuts against lower surfaces of the longitudinally-extending channels of the another planar segment The latch protrusion may include a cantilevered portion extending within-plane along the one planar segment, and a locking portion extending out-of-plane from the cantilevered portion received within the latch recess, The tongue may be tapered such that a first side of the tongue engages a first side of the receiver before a second side of the tongue engages a second side of the receiver. The receiver may be tapered such that a first side of the receiver engages a first side of the tongue before a second side of the tongue engages a second side of the receiver. The tongue and the receiver may be monolithically formed.

Yet another aspect of the present disclosure is directed to a sheet of material having a plane-to-plane joint, the sheet of material including one planar segment, another planar segment, a tongue formed in the one planar segment, a receiver formed in the another planar segment for receiving the tongue, the receiver dimensioned and configured to hold an under surface of the one planar segment in close proximity with a top surface of the another planar segment, a fastening member formed in the one planar segment, and a mating fastening member formed in the another planar segment The fastening member and mating fastening member engage one another upon insertion of the tongue into the receiver.

The receiver may include alignment members stamped in opposing sides of the another planar segment to transversely limit the one and another planar segments from moving transversely relative to one another upon insertion of the tongue into the receiver. The tongue may include at least one stop member to engage with and abut against at least one of the alignment members to limit longitudinal insertion of the tongue into the receiver. At least one of the tongue and the receiver may include at least one biasing member for biasing the one planar segment away from the other planar segment such that opposing sides of the one planar segment abuts against lower surfaces of the alignment members of the another planar segment. The tongue may be tapered such that a first side of the tongue engages a first side of the receiver before a second side of the tongue engages a second side of the receiver. The receiver may be tapered such that a first side of the receiver engages a first side of the tongue before a second side of the tongue engages a second side of the receiver. The tongue and the receiver may be simultaneously formed. The tongue and the receiver, fastening members, alignment members, stop member and biasing members may be simultaneously formed.

The methods and sheet materials of the present disclosure has other features and advantages which will be apparent from or are set forth in more detail in the accompanying drawings, which are incorporated in and form a part of this specification, and the following detailed description of the disclosure, which together serve to explain the principles of the present disclosure.
FIG. 1 is a perspective view of a three-dimensional bracket formed from a sheet of material, the bracket having a predetermined angle and a plane-to-plane joint constructed in accordance with the present disclosure.
FIG. 2 is a partial top plan view of an intermediate sheet of material prepared to form the bracket of FIG. 1.
FIG. 3 is a partial cross-sectional view of the intermediate sheet of material of FIG. 2 taken substantially along line 3-3 of FIG. 2.
FIG. 4 is a partial top plan view of another intermediate sheet of material prepared from the intermediate sheet of FIG. 2 to form the bracket of FIG. 1.
FIG. 5 is a partial cross-sectional view of the intermediate sheet of material of FIG. 4 taken substantially along line 5-5 of FIG. 4.
FIG. 6 is a partial cross-sectional view of the intermediate sheet of material of FIG. 4 after it has been folded to the predetermined angle.
FIG. 7 is a partial perspective view of the intermediate sheet of material of FIG. 4 before it has been folded to the predetermined angle.
FIG. 8 is a partial perspective view of the intermediate sheet of material of FIG. 4 after it has been folded to the predetermined angle.
FIG. 9 is a partial perspective view of another intermediate sheet of material similar to that shown in FIG. 4 before it has been folded to the predetermined angle.
FIG. 10 is a partial perspective view of the intermediate sheet of material similar to that shown in FIG. 4 after it has been folded to the predetermined angle.
FIG. 11 is a partial perspective view of another intermediate sheet of material similar to that shown in FIG. 4 before it has been folded to the predetermined angle.
FIG. 12 is a partial perspective view of the intermediate sheet of material similar to that shown in FIG. 4 after it has been folded to the predetermined angle.
FIG. 13 is a partial perspective view of another intermediate sheet of material similar to that shown in FIG. 4 before it has been folded to the predetermined angle.
FIG.14 is a partial perspective view of the intermediate sheet of material similar to that shown in FIG. 4 after it has been folded to the predetermined angle.
FIG. 15 is a partial perspective view of another intermediate sheet of material before it has been folded to the predetermined angle.
FIG. 16 is a partial perspective view of the intermediate sheet of material after it has been folded to the predetermined angle.
FIG. 17 is a partial perspective view of another intermediate sheet of material before it has been folded to the predetermined angle.
FIG. 18 is a partial perspective view of the intermediate sheet of material after it has been folded to the predetermined angle.
FIG. 19 is a partial perspective view of the plane-to-plane joint of FIG. 1 prior to engagement.
FIG. 20 is a partial perspective view of the plane-to-plane joint of FIG. 1 during partial engagement.
FIG. 21 is a partial perspective view of the plane-to-plane joint of FIG. 1 following full engagement.

Reference will now be made in detail to the preferred embodiments of the disclosure, examples of which are illustrated in the accompanying drawings. While the disclosure will be described in conjunction with the preferred embodiments, it will be understood that they are not intended to limit the disclosure to those embodiments. On the contrary, the disclosure is intended to cover alternatives, modifications and equivalents, which may be included within the spirit and scope of the disclosure as defined by the appended claims.

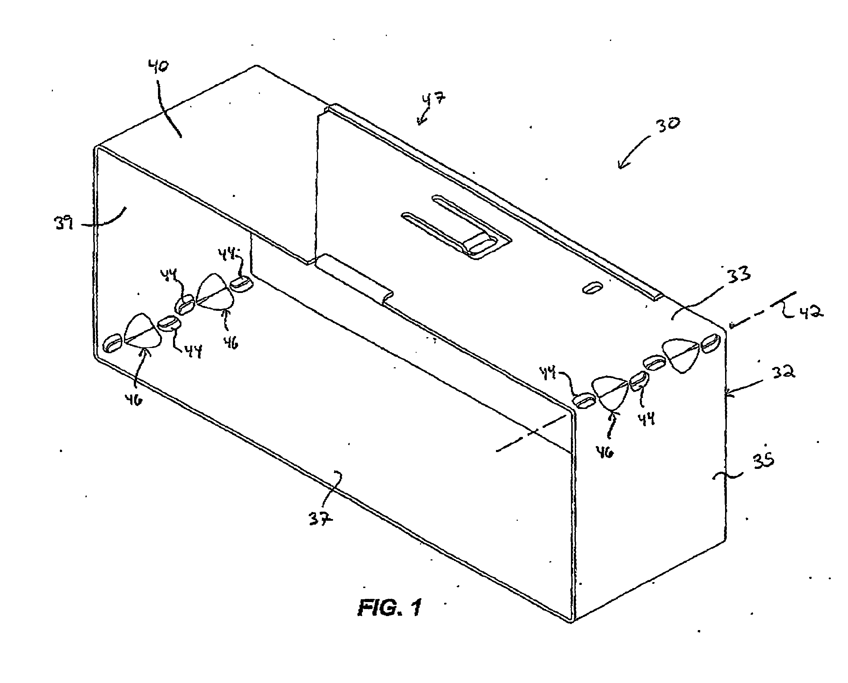

Turning now to the drawings, wherein like components ate designated by like reference numerals throughout the various figures, attention is directed to FIG. 1 which illustrates a three-dimensional bracket formed from a two-dimensional single sheet of material in accordance with the present disclosure, which bracket is generally designated by the numeral 30. While the illustrated embodiment is a bracket, one will appreciate that a number of three-dimensional structures including, but not limited to, electronic component chassis for computers, audio receivers, televisions, DVD players, vehicles, construction, aerospace, packaging, appliances, industrial, metal and other non-electronics-related goods may be formed in accordance with the present disclosure.

In the illustrated embodiment, the bracket is formed of a monolithic sheet of material 32 and includes five planar segments 33, 35, 37, 39 and 40, wherein each adjoining planar segment is separated by a respective bend line 42 populated by one or more bend-controlling structures 44. One will appreciate that three, four, five or more planar segments may be provided depending upon the desired overall geometry of the resulting three-dimensional structure.

The bend-controlling structures and other principles which control precise sheet material folding are set forth in more detail in Applicant's prior U.S. Patent Application Nos. 11/080,288, 10/795,077, 10/672,766, 10/256,870 and 09/640,267 (now U.S. Patent No. 6,481,259). In the illustrated embodiment the bend-controlling structures are stamped, however, one will appreciate that any of the bend-controlling elements disclosed in the above-mentioned applications and other suitable means may be utilized.

In accordance with the present disclosure, sheet of material 32 includes angular-keying element 46 and a plane-to-plane joint 47. In FIG. 1, the keying element 46 is only illustrated on two corners of the bracket, however, all four corners may be and preferably are provided with similar keying elements. One will also appreciate that the sheet material may be provided with one or more bend lines with or without keying elements, one or more planar joints, or any combination thereof.

In the illustrated embodiments, the sheet material is 18-gauge sheet steel. However, one will appreciate that other sheet materials of different materials including other metals, composites and plastics as well as other gauges can be utilized in accordance with the present disclosure. For example, 16-gauge sheet material, 18-gauge sheet material, 20-gauge sheet or relatively thin or relatively thick sheet materials and other suitable thickness sheet material may be used. Also, other sheet materials may be used including, but are not limited to, stainless steel, aluminum, and other suitable metals and alloys. Also, one will appreciate that other materials may be used including, but not limited to, composites, plastics, magnesium and other suitable materials.

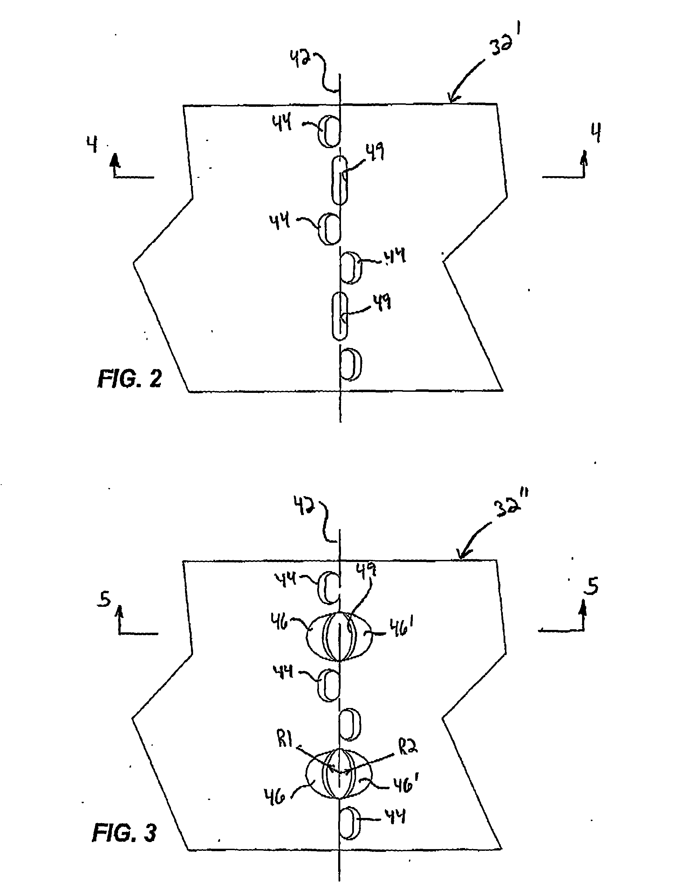

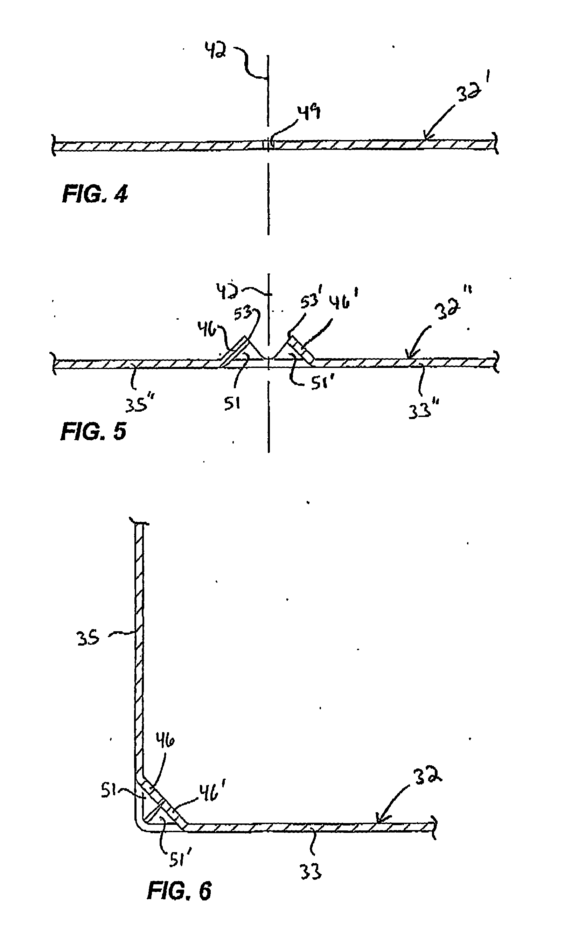

Turning now to FIG. 2 and FIG. 3, various processes including stamping, punching, roll forming, embossing and other suitable means may be utilized to form the keying element in the sheet of material along the bend line. In particular, FIG. 2 illustrates a first intermediate sheet of material 32' in which bend-controlling structures 44 have been stamped, punched or otherwise formed similar to those structures described in Applicant's above-mentioned prior applications. One or more keying apertures 49 are also stamped, punched or otherwise formed in the first intermediate sheet along the bend line and between the bend-controlling structures. As shown in FIG. 4, the keying apertures extend entirely through the sheet of material. While preferable, one will appreciate that the apertures need not extend completely through the sheet of material.

In the illustrated embodiment, the keying apertures 46 are formed simultaneously with the bend-controlling structures 44. Such simultaneous formation may serve to minimize manufacturing tolerances between the bend-controlling structure, the keying apertures, and the resulting keying elements. However, one will appreciate that the keying apertures may be formed independently of the bend controlling structures. For example, the keying apertures may be formed before or after the bend-controlling structures, and with similar means or different means. For example, the bend-controlling structures could be stamped while the keying apertures are punched. One will appreciate that independently forming the keying elements will form one or more additional intermediate sheets of material, that is, one or more intermediate stages in which the sheet material has been worked.

As shown in FIG. 3, a second intermediate sheet of material 32" in which pairs of keying elements 46, 46' have been stamped, punched or otherwise formed immediately adjacent the keying apertures 49, each one being formed on opposite sides of the bend line. As can be seen in FIG. 3, the keying aperture is now deformed in that it is now flared as compared to its elongated shape shown in FIG. 2. In the illustrated embodiment, two sets of keying elements 46, 46' are provided, however, one will appreciate that one, two, three or more sets of keying elements may be provided along a bend line depending upon various factors including, but not limited to, the length of the bend line as well as the thickness and type of the sheet material. Preferably a sufficient number of keying elements are provided to sufficiently key the corner at the predetermined angle, that is, to provide sufficient structural integrity and rigidity to hold the corner at the predetermined angle.

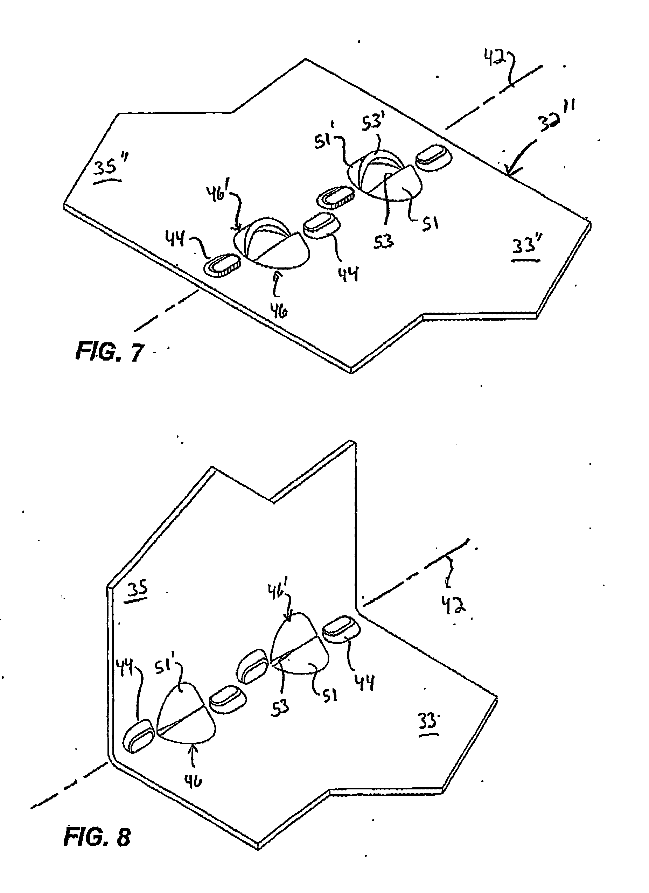

As shown in FIG. 5 and FIG. 7, each keying element 46, 46' extends upwardly in the thickness direction and out-of-plane prom the second intermediate sheet 32". Each keying element also includes a body 51,51' which forms a substantially louver-like web having a free edge 53, 54'. One will appreciate that the inside surfaces of keying aperture 49 form the free edge surfaces 56, 58' when the keying element is formed.

As the sheet of material is provided with bend-controlling structures 44, the sheet of material may be precisely bent along bend line 42 in a manner that is described in great detail in Applicant's above-mentioned prior applications. Utilizing the bending precision of bend-controlling structures 44, the keying elements 46, 46' and 60, 51' of the present disclosure are dimensioned and configured to register with one another upon bending the sheet of material 32 along bend line 42 and thereby limit the bending to a predetermined angle, as shown in FIG. 6 and FIG. 8. In particular, each pair of keying elements includes one keying element 46 (also herein referred to as "one displacement") having a particular shape, and another keying element 46' (also herein referred to as "another displacement") that is complementary in shape to the one keying element.

Upon bending, keying element 46 and keying element 46' will engage one another during bending and limit the angular displacement of one planar segment 33 on one side of the bend line with respect to another planar segment 35 on the other side of the bend line. For example, as shown in FIG. 6 and FIG. 8, the free edges are dimensioned and configured to abut against one another at the predetermined angle. In the illustrated embodiments, the free edges extend approximately 45° with respect to the planar surface of the sheet of material and abut against one another once the bending of sheet of material reaches 90°. One will appreciate that the predetermined angle may be 30°, 45°, 60°, or other predetermined angles as desired, and that the relative angle between the tree edges and the planar surface may be adjusted accordingly.

As shown in FIG. 3, the one free edge 53 has a radius R1, and the another free edge 53' has a radius R2 that is substantially equal to radius R1. In particular, the free edges abut directly against one another once the predetermined angle is reached. In this embodiment, the bodies and free edges are substantially symmetric and have a semi-cylindrical profile that extends obliquely from the sheet of material.

One will appreciate that the bodies and free edges may have other suitable geometries provided that they are complementary with one another to allow engagement. For example, the bodies may be semi-spherically shaped to provide semi-circular free edges. Alternatively, the bodies may be triangularly shaped to provide triangular free edges, rectangularly shaped providing perpendicular free edges, trapezoidally shaped, hexagonally shaped, and so on. One will appreciate that other suitable geometric profiles may also be used provided they provide structure that extends at an angle that extends from the planar surface of the planar segment.

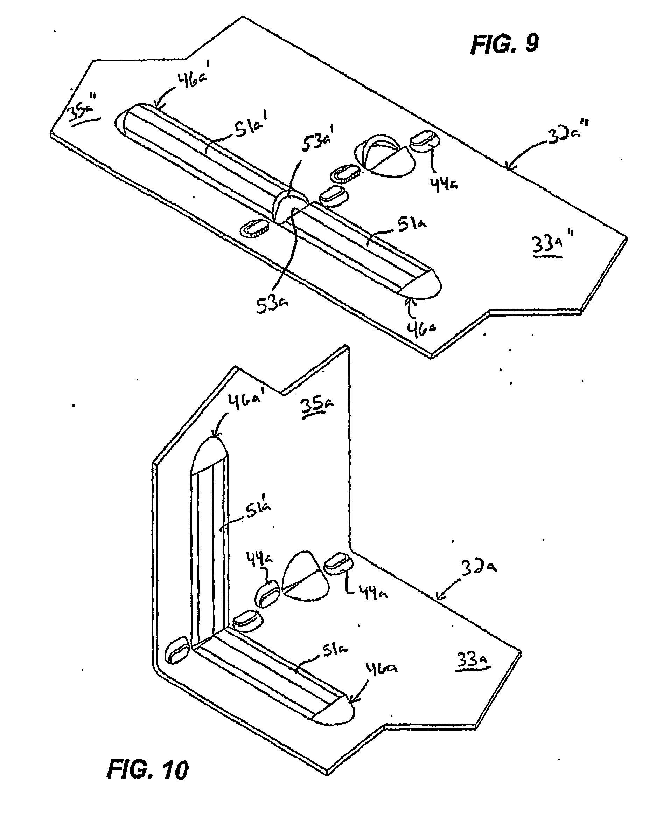

In one embodiment, shown in FIG, 9 and FIG. 10, one set of keying elements 46a and 46a' has a cylindrical profile. In particular, semi-cylindrical bodies 51a and 51a' extend substantially parallel to a planar surface of the sheet of material. One will appreciate that such a configuration may be used purely for aesthetics, or for utilitarian reasons. For example, the elongated channel provided by semi-cylindrical bodies 51a and 51a' may provide a path for wires, other components, materials or substances or may provide a rib for the purpose of further rigidifying planar segments 33a and 35a.

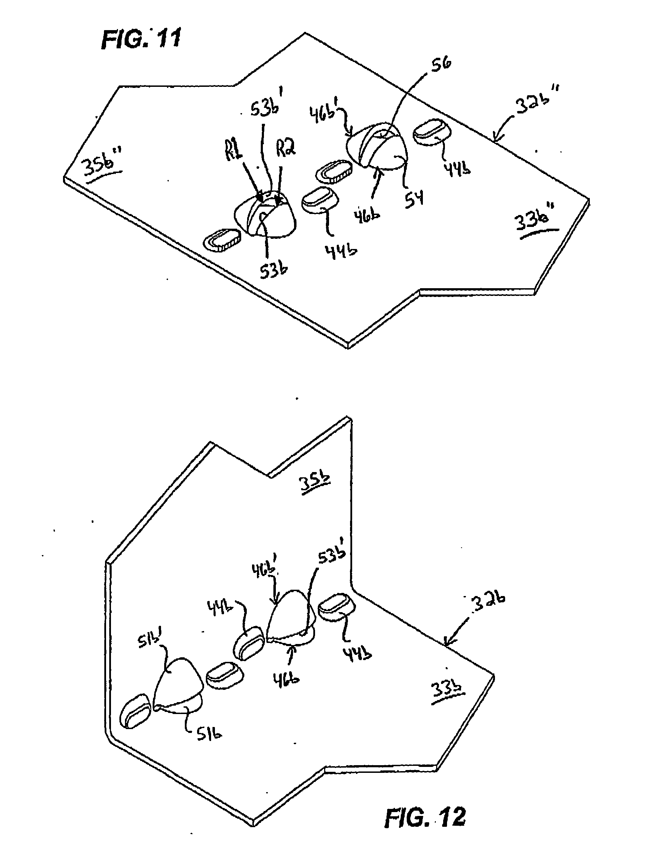

In other embodiments, the bodies are dimensioned and configured to cooperate with one another instead of the free edges. For example, in the embodiment shown in FIG. 11 and FIG. 12, the keying elements 46b, 46b' are dimensioned such that one is received within the other. The body of one keying element 46b has an outer surface 61 having an outer radius, while the body of another keying element 46b' has an inner surface 63 having an inner radius. The outer inner surfaces 61 and 63 are dimensioned and configured to provide frictional engagement therebetween, once the predetermined angle has been reached. For example, the outer and inner radii of the outer and inner surfaces 61 and 63 are configured to provide an interference fit, and thus frictional engagement, once the predetermined angle is reached so as to limit the angular displacement of the one side 33b" relative to the another side 35b". One way to accomplish this is to have the outer radius R1 adjacent free edge 53b slightly less than the inner radius R2 adjacent free edge 53b' and have the outer radius remote from free edge 53b slightly greater than the inner radius remote from free edge 53b'.

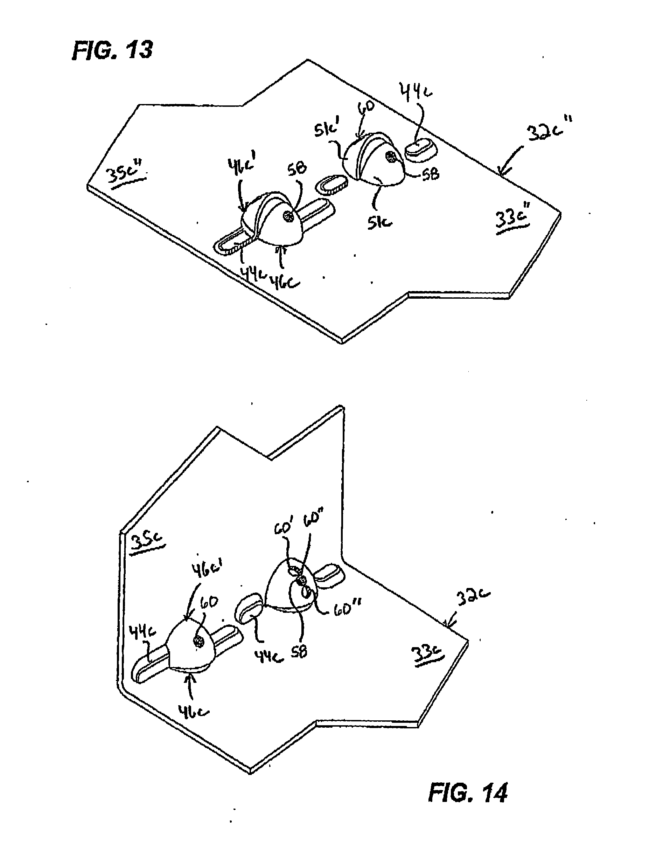

One will appreciate that other suitable means may be utilized to restrict relative movement between the keying elements. For example, in FIG. 13 and FIG.14, body 51c of keying element 46c includes a radially-extending protrusion 65, while body 51c' of keying element 46c' includes a radially-extending recess 67. The protrusion 65 and the recess 67 are dimensioned and configured to engage one another to limit the angular displacement such that the protrusion snaps into the recess once the predetermined angle is reached. As can be seen in FIG. 14, a plurality of circumferentially-spaced, radially-extending recesses 67', 67", 67" 'which are dimensioned and configured to engage a radially-extending protrusion 65' to adjustably limit the angular displacement planar segments 33c, 35c relative to the another side based on the desired angular displacement

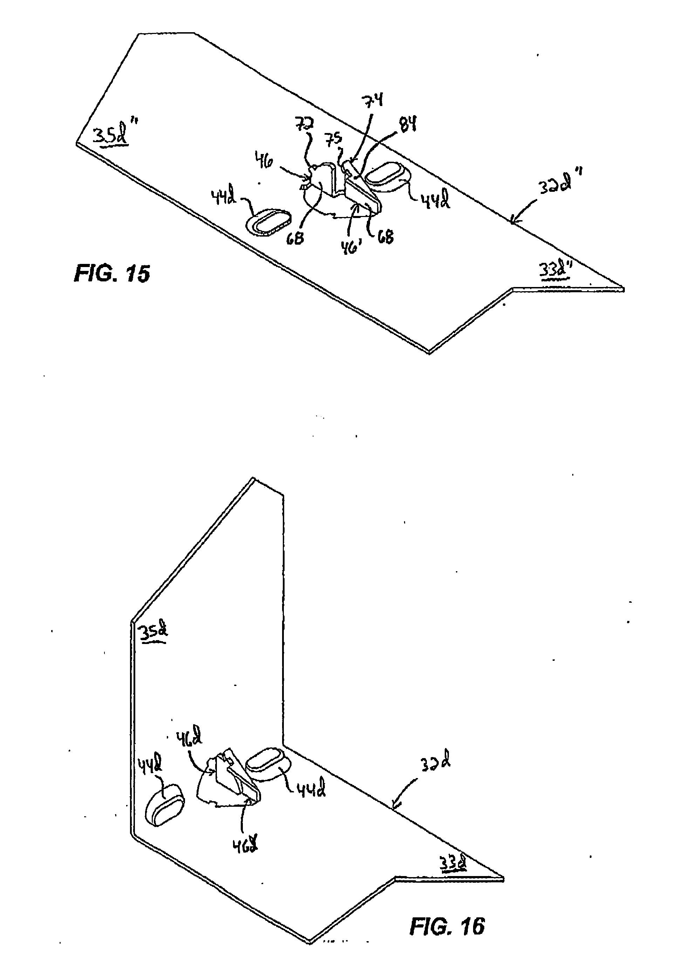

One will further appreciate that other suitable means may be utilized to restrict relative movement between the keying elements. For example, in FIG. 15 and FIG. 16, keying elements 46d, 46d' are in the form of self-latching flanges 68, 70' Which are configured to latch together upon bending sheet of material 32d to a desired angle. In the illustrated embodiment, the flanges are perpendicular and aligned such that a latch pin 72 of flange 68 is received within a latch hook 74 of flange 68'. The latch hook includes a ramped edge 75 which temporarily biases the latch pin to one side as the sheet of material is bent to the desired angle. Once the latch pin snaps into the recess of the latch hook, planar segments 33d and 35d are rigidly fixed at the predetermined angle. While the self-latching keying elements may be formed in the manners set forth above, one will appreciate that other means may also be utilized to form keying elements 46d, 46d' including laser cutting, water jet cutting, casting, and other suitable means. One will also appreciate that such cutting and casting means may also be utilized in forming any of the keying elements discussed above.

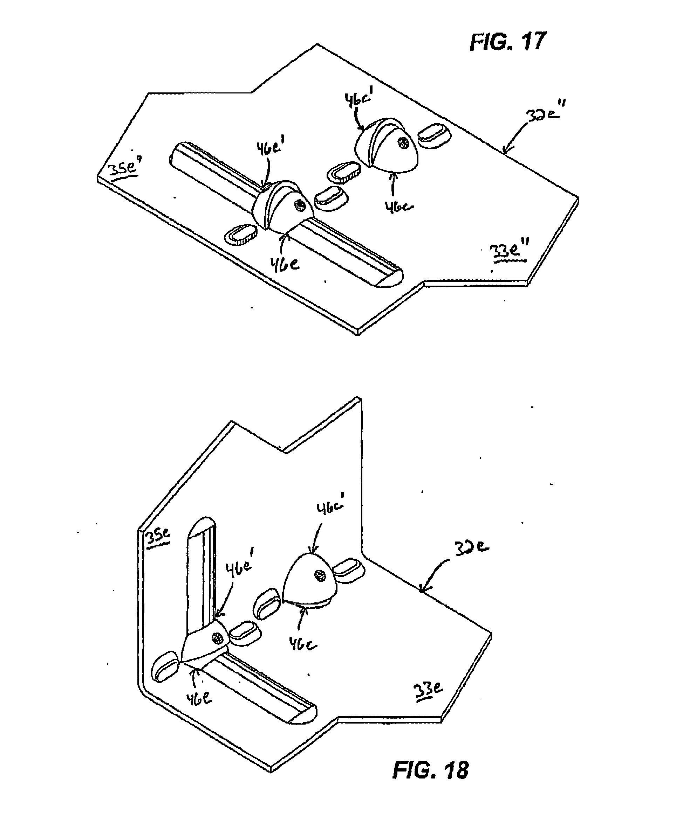

One will also appreciate that any bend line 42 may be populated with one, two three or more of keying elements 46, 46a, 46b, 46c or 46d, or combination thereof For example, a bend line may be provided with a set of keying elements 46, 46' (see, e.g., FIG. 8) to promote a hard stop keying the desired angle between planar segments 33 and 35, and further provided with a set of keying elements 46d, 46d' (see, e.g., FIG. 16) to prevent unfolding of the planar segments from the desired angle. Such combinations may be particularly useful in instances where the sheet of material is not folded into a closed structure, for example, is not folded into a square-like structure and is instead folded into a U-shaped structure. Furthermore, the different elements of the various keying elements may also be combined. For example, the ribbed con:6,guration of FIG. 9 and FIG. 10 may be utilized with the triple-dimpled semispherical configuration of FIG. 13 and FIG. 14 to provide keying elements 46e and 46e' as shown in FIG. 17 and FIG. 18. Such a configuration would provide planar segments 33e and 35e with greater structural integrity while providing sheet 32e with flexibility of being adjustable between three desired angles.

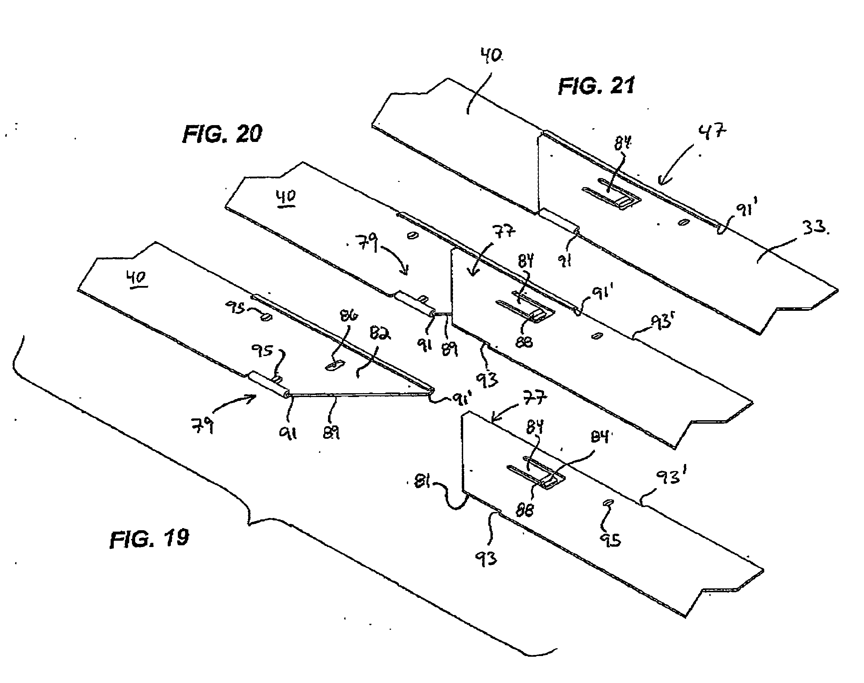

Turning now to FIG. 19, FIG. 20 and FIG. 21, sheet of material 32 includes a plane-to-plane joint 47 that is configured to releasably secure planar segments 33 and 40 to one another without the need for additional fasteners. The joint includes a tongue 77 formed in one planar segment 33 and a receiver 79 formed in another planar segment 40 for longitudinally receiving the tongue. The receiver is dimensioned and configured to hold an under surface 81 of planar segment 33 in close proximity with an upper surface 82 of planar segment 40 and transversely limit the planar segments with respect to one another.

A latch protrusion 84 is formed in tongue 77 of planar segment 33 while a corresponding latch recess 86 is formed in the another planar segment 40. Preferably, the latch protrusion extends within-plane, that is, within the thickness of sheet of material 32. The latch protrusion and latch recess are dimensioned and configured for self-latching upon insertion of the tongue into the receiver. In particular, the latch protrusion has a ramped end 88 that will engage and ride up tapered receiver edge 89 of the receiver as tongue 77 is inserted into the receiver. The ramped end is a locking portion that extends out-of-plane from the cantilevered portion. Once the tongue is fully inserted into the receiver, ramped end 75 will drop into and engage with latch recess 86 and prevent unwanted separation of the tongue 77 from the receiver 79.

Latch protrusion 84 and/or the latch recess 86 may be formed by stamping, punching, roll forming, embossing or other suitable means. Preferably, the latch protrusion and/or the latch recess are monolithically formed with the sheet of material.

As shown in FIG. 19, the receiver 79 includes longitudinally-extending channels 91, 91' stamped in opposing sides of planar segment 40 which telescopically receive tongue 77. One will appreciate that other suitable positioning means may be utilized in accordance with the present disclosure. For example, segmented channels formed by multiple protrusions may be utilized. In this case, each protrusion would provide a recess, in which the multiple recesses would be linearly arranged to slidably receive the tongue in a similar manner as the channels receive the tongue.

Preferably the tongue 77 and/or the receiver 79 are tapered such that a first side of the tongue engages a first side of the receiver before a second side of the tongue engages a second side of the receiver. Such configuration allows one channel 91 to be shorter (e.g., the channel shown on the left side of planar segment 40) than the other channel 91' thereby allowing the insertion of tongue 77 into the receiver 79 without the need of beginning insertion of the tongue 77 at the outer extremity of the receiver as shown in FIG. 20. For example, the tongue may be positioned in overlapping proximity such that one side may be transversely slid into the longer channel 91' while the other side does not register with the shorter channel 91, into the position shown in FIG. 20. Alternatively, and if space permits, the tongue may simply be longitudinally slid into the receiver from the position shown in FIG. 19 to the position shown in FIG. 20.

Preferably the tongue and/or the receiver are tapered such that a first side of the tongue engages a first side of the receiver before a second side of the tongue engages a second side of the receiver.

The tongue may be provided with one or more channel-engaging shoulders 93, 93' that are dimensioned and configured to engage with and abut against the longitudinally-extending channels 91, 91' so as to limit longitudinal insertion of the tongue into the receiver. Also, the tongue and/or the receiver may include one or more biasing bulges 95 for biasing the planar segments away from one another. Such a biasing configuration may reduce unwanted play in the joint that may be inherent from manufacturing tolerances, and thereby reduce rattling and other unwanted characteristics.

For convenience in explanation and accurate definition in the appended claim, the terms "up" or "upper", "down" or "lower", "inside" and "outside" are used to describe features of the present disclosure with reference to the positions of such features as displayed in the figures.

In many respects the modifications of the various figures resemble those of preceding modifications and the same reference numerals followed by subscripts "a", "b", "c", "d" and "e" designate corresponding parts.

The foregoing descriptions of specific embodiments of the present disclosure have been presented for purposes of illustration and description. They are not intended to be exhaustive or to limit the disclosure to the precise forms disclosed, and obviously many modifications and variations are possible in light of the above teaching. The embodiments were chosen and described in order to best explain the principles of the disclosure and its practical application, to thereby enable others skilled in the art to best utilize the disclosure and various embodiments with various modifications as are suited to the particular use contemplated It is intended that the scope of the disclosure be defined by the Claims appended hereto and their equivalents.

## Claims

1. A sheet of material having a plane-to-plane joint, the sheet of material comprising:
one planar segment;
another planar segment;
a tongue formed in the one planar segment;
a receiver formed in the another planar segment for longitudinally receiving the tongue, the receiver dimensioned and configured to hold a lower surface of the one planar segment in close proximity with an upper surface of the another planar segment and transversely limit the one and another planar segments;
a latch protrusion formed in the one planar segment;
a latch recess formed in the another planar segment,
wherein the latch protrusion and latch recess are dimensioned and configured for self-latching upon insertion of the tongue into the receiver.

2. The sheet of material as defined in claim 1 wherein,
the receiver includes longitudinally-extending channels stamped in opposing sides of the another planar segment.

3. The sheet of material as defined in claim 2 wherein,
the tongue includes a channel-engaging shoulder dimensioned and configured to engage with and abut against at least one of the longitudinally-extending channels to limit longitudinal insertion of the tongue into the receiver.

4. The sheet of material as defined in claim 1 wherein,
at least one of the tongue and the receiver includes a biasing bulge for biasing the one planar segment away from the other planar segment such that opposing sides of the one planar segment abuts against lower surfaces of the longitudinally-extending channels of the another planar segment.

5. The sheet of material as defined in claim 1 wherein,
the latch protrusion includes a cantilevered portion extending within-plane along the one plantar segment, and a locking portion extending out-of-plane from the cantilevered portion received within the latch recess.

6. The sheet of material as defined in claim 1 wherein,
the tongue is tapered such that a first side of the tongue engages a first side of the receiver before a second side of the tongue engages a second side of the receiver.

7. The sheet of material as defined in claim 1 wherein, the receiver is tapered such that a first side of the receiver engages a first side of the tongue before a second side of the tongue engages a second side of the receiver.

8. The sheet of material as defined in claim 1 wherein, the tongue and the receiver are monolithically formed.
